# EUROPÄISCHE PATENTANMELDUNG

(11) **EP 1 059 612 A1**
(43) Veröffentlichungstag der Anmeldung: **13.12.2000**
(21) Anmeldenummer: 00810387.1
(22) Anmeldetag: 08.05.2000
(51) Int. Cl.: G06T 15/20

(54) **Verfahren zum Visualisieren eines räumlich aufgelösten Datensatzes**

(30) Priorität: 08.06.1999 EP 99810503
(71) Anmelder: Sulzer Markets and Technology AG, 8401 Winterthur (CH)
(72) Erfinder: Margadant, Felix Dr., 7304 Maienfeld (CH)
(74) Vertreter: Sulzer Management AG

(57) **Zusammenfassung**

Bei einem Verfahren zum Visualisieren eines räumlich aufgelösten Datensatzes, dessen Daten jeweils einem Volumenelement zugeordnet sind, dessen Lage durch Koordinaten in einem nicht-kartesischen Mess-Koordinatensystem beschrieben wird, werden die Daten M(rₖ,ϑⱼ,zᵢ,) als Texturen (Trₖ,Tϑⱼ,Tzᵢ) in einen Grafikbeschleuniger (1) geladen und dann wird durch Überlagerung von Texturen (Trₖ,Tϑⱼ,Tzᵢ) eine bildliche Darstellung erzeugt.

## Beschreibung

Die Erfindung betrifft ein Verfahren zum Visualisieren eines räumlich aufgelösten Datensatzes gemäss dem Oberbegriff des unabhängigen Anspruchs sowie die Verwendung dieses Verfahrens zum Generieren dreidimensionaler Darstellungen eines Körpers.

Die Visualisierung eines räumlich aufgelösten Datensatzes durch bildliche Darstellungen entspricht in vielen technischen und industriellen Bereichen aber auch in der modernen medizinischen Diagnostik und Therapie einem ständig wachsenden Bedürfnis. Zahlreiche bildgebende Untersuchungsmethoden wie z. B. Computertomographie, Kernspintomographie oder Bildgebung mittels Ultraschall, bei denen anhand von messtechnisch erfassten Datensätzen Darstellungen von Organen oder Bereichen des menschlichen Körpers erstellt werden, werden in der modernen Medizin mit grossem Erfolg eingesetzt.

Als ein Anwendungsbeispiel sei hier die transösophagale Herzabbildung mittels Ultraschall genannt, die hauptsächlich zu Diagnosezwecken eingesetzt wird. Viele der heute üblichen Ultraschallsysteme erzeugen jedoch nur zweidimensionale Bilder und es ist oft selbst für Spezialisten sehr schwierig, anhand solcher zweidimensionaler Bilder die dreidimensionale Anatomie zu analysieren. Deshalb werden grosse Anstrengungen unternommen, die Anatomie mittels dreidimensionaler Ultraschallbilder darzustellen.

Vom Stand der Technik sind auch schon solche Ultraschallsysteme bekannt, die dreidimensionale Bilder erzeugen. Dazu wird die abzubildende Anatomie, z. B. eine Herzkammer, zunächst bereichsweise mittels Ultraschall abgetastet und anschliessend aus den derart erhaltenen Echosignalen in einer Datenverarbeitungsanlage ein dreidimensionales Bild rekonstruiert.

Ein wesentlicher Nachteil dieser bekannten 3D-Ultraschallsysteme besteht darin, dass die Zeit, die zur Erstellung eines dreidimensionalen Bildes mit ausreichender räumlicher Auflösung benötigt wird, relativ lang ist. Mit bekannten 3D-Systeme ist man noch weit von den Videofrequenzen und ihren Bildaufbauzeiten von typischerweise 1/25 Sekunden entfernt, sodass sich keine bewegten Darstellungen erzielen lassen. Für Anwendungen wie beispielsweise die Navigation oder Lokalisierung von innerhalb des Körpers benötigten Instrumenten, z. B. Herzkathetern zur Ablation von Reizleitungen im Herzen oder anderer wenig-invasiver Instrumente, sind derart lange Zeiten für die Bilderstellung unbefriedigend, weil sie dem Bedürfnis einer schnellen und genauen Lokalisierung der momentanen Lage der Instrumente im Körper entgegenstehen. Dies gilt insbesondere für solche Fälle, bei denen sich das untersuchte oder behandelte Körperteil bewegt, beispielsweise bei Eingriffen oder Untersuchungen am schlagenden Herzen.

Bei der Verwendung sehr moderner Abtastsysteme ist die relativ lange Zeit, die zur Erstellung einer dreidimensionalen Abbildung benötigt wird, weniger durch die Datenaquisition an sich verursacht, sondern durch die Visualisierung des Datensatzes, das heisst das Erzeugen einer bildlichen Darstellung aus dem räumlich aufgelösten Datensatz. Es sind nämlich bereits sehr schnell abtastende Ultraschallsonden entwickelt worden, mit denen das interessierende Volumen in mehreren Ebenen gleichzeitig abgetastet wird. Solche Ultraschallsonden umfassen beispielsweise mehrere schwenkbare, linear oder allgemeiner in einem Array angeordnete Ultraschallwandler, von denen mehrere parallel betrieben werden, sodass sie ein gleichzeitiges Abtasten mehrerer Ebenen ermöglichen. Hierdurch werden die Datensätze für die Bildgebung sehr schnell bereitgestellt.

Die heute für die dreidimensionale Darstellung von räumlich aufgelösten Datensätzen verwendeten Verfahren und Algorithmen sind jedoch sehr rechenintensiv und führen selbst bei der Verwendung sehr schneller und leistungsfähiger Computer zu Erstellungszeiten für eine einzelne dreidimensionale Abbildung, die im Sekundenbereich liegen. Solche bekannten Verfahren sind daher für Echtzeitanwendungen nicht geeignet.

Ausgehend von diesem Stand der Technik, ist es daher eine Aufgabe der Erfindung, ein besonders schnelles Verfahren zum Visualisieren eines räumlich aufgelösten Datensatzes bereitzustellen. Im speziellen soll es das Verfahren ermöglichen, aus einen räumlich aufgelösten Datensatz, welcher die volumenaufgelöste Abtastung eines Körpers repräsentiert, in deutlich kürzerer Zeit eine dreidimensionale Darstellung des Körpers zu erzeugen.

Das diese Aufgaben lösende Verfahren zum Visualisieren eines räumlich aufgelösten Datensatzes ist durch die Merkmale des unabhängigen Anspruchs gekennzeichnet.

Erfindungsgemäss wird also ein Verfahren zum Visualisieren eines räumlich aufgelösten Datensatzes vorgeschlagen, dessen Daten jeweils einem Volumenelement zugeordnet sind, dessen Lage durch Koordinaten in einem nicht-kartesischen Mess-Koordinatensystem beschrieben wird, bei welchem die Daten als Texturen in einen Grafikbeschleuniger geladen werden und dann durch Überlagerung von Texturen eine bildliche Darstellung erzeugt wird.

Durch diese Massnahmen wird das erfindungsgemässe Verfahren enorm schnell, denn dem Grafikbeschleuniger muss für jede darzustellende Textur nur noch übermittelt werden, bei welchen Koordinaten einer Ausgabeeinheit, beispielsweise eines Bildschirms, die Eckpunkte der Textur zu liegen kommen. Der Grafikbeschleuniger stellt dann die entsprechende Textur perspektivisch korrekt zwischen diesen Eckpunkten dar. Dies bringt eine drastische Reduzierung des Rechenaufwands mit sich. Durch Überlagern der einzelnen darzustellenden Texturen lässt sich somit in sehr kurzer Zeit eine bildliche Darstellung des Datensatzes erzeugen. Zudem ist es nicht notwendig, den darzustellenden Datensatz in ein kartesisches Koordinatensystem überzuführen, d. h. ein "Resampling" des Datensatzes durchzuführen, bevor die Daten als Texturen in den Grafikbeschleuniger geladen werden. Dies bedeutet eine weitere Reduzierung des Rechenaufwandes und damit einen zusätzlichen Zeitgewinn. Durch den Verzicht auf eine Transformation in kartesische Koordinaten wird ferner das dreidimensionale Oversampling vermieden, das insbesondere bei einer Transformation von krummlinigen Koordinaten, wie Zylinder- oder Kugelkoordinaten in kartesische Koordinaten zu einer Vervielfachung der Daten und damit zu einer deutlichen Erhöhung des Rechen-, Speicher- und Zeitaufwands führt.

Durch den gezielten Einsatz des Grafikbeschleunigers erlaubt das erfindungsgemässe Verfahren einen deutlich rascheren Aufbau der bildlichen Darstellung als bisher bekannte Verfahren zum Visualisieren räumlich aufgelöster Datensätze. Dies ist insbesondere für solche Anwendungen von Vorteil, bei denen die Datensätze aktuelle volumenaufgelöste Messwerte sind bzw. auf solchen basieren und diese Messwerte in möglichst kurzer Zeit in eine dreidimensionale Darstellung transformiert werden müssen. Das erfindungsgemässe Verfahren ermöglicht nämlich eine Visualisierung dieser Messwerte und damit eine Visualisierung dreidimensionaler Strukturen in Echtzeit. So kann beispielsweise eine kontinuierliche und stets aktuelle dreidimensionale Ansicht eines schlagenden Herzens realisiert werden, indem die von einer Ultraschallsonde erfassten volumenaufgelösten Messsignale mittels des erfindungsgemässen Verfahrens als dreidimensionale Darstellungen auf einen Bildschirm abgebildet werden. Das erfindungsgemässe Verfahren ist aufgrund des Grafikbeschleunigers so schnell, dass Bildraten von einigen zehn Bildern, beispielsweise zwanzig Bildern, pro Sekunde realisierbar sind.

Ein weiterer Vorteil des erfindungsgemässen Verfahrens liegt darin, dass es sehr kostengünstig ist, denn es lässt sich mit handelsüblichen Grafikbeschleunigern ohne zusätzlich apparativen Aufwand durchführen.

Ein weiterer Vorteil des erfindungsgemässen Verfahrens ist es, dass es nicht an ein spezielles Koordinatensystem gebunden ist, in dem der darzustellende Datensatz vorliegen muss, und somit sehr flexibel ist. Das Verfahren ist für alle lokal orthogonalen Koordinatensystem geeignet, in denen räumlich aufgelöste Datensätze normalerweise vorliegen. Daher werden vorzugsweise die Daten im ursprünglichen Mess-Koordinatensystem, das heisst ohne dass sie in ein anderes Koordinatensystem umgerechnet werden, in den Grafikbeschleuniger geladen, denn dies spart Rechen- und Zeitaufwand und ist mit weniger Fehlern behaftet, weil kein Resampling erforderlich ist.

Sind die Daten beispielsweise Messwerte, welche aus einer volumenaufgelösten Abtastung eines Körpers resultieren, so ist das Mess-Koordinatensystem, in welchem die Messwerte vorliegen, normalerweise durch die verwendete Abtastvorrichtung bzw. deren Funktionsweise, vorgegeben. Bei Ultraschallsonden, z. B., ist das Mess-Koordinatensystem typischerweise ein Zylinderkoordinatensystem. Mit dem erfindungsgemässen Verfahren können aber auch Datensätze, die in anderen, insbesondere in lokal orthogonalen Koordinatensystemen vorliegen, dargestellt werden, ohne dass die Daten vorher in ein kartesisches System übergeführt werden müssen. Das Verfahren ist daher sehr flexibel und eignet sich für eine Vielzahl von Abtastsystemen, wobei vorzugsweise die Daten jeweils in dem Mess-Koordinatensystem als Texturen in den Grafikbeschleuniger geladen werden, indem sie messtechnisch erfasst wurden. Dieses Mess-Koordinatensystem ist üblicherweise durch die jeweilige Abtastvorrichtung vorgegebenen.

Vorzugsweise werden die Texturen derart an das Mess-Koordinatensystem angepasst, dass innerhalb einer Textur jeweils eine der Koordinaten des Mess-Koordinatensystems einen konstanten Wert hat. Dann entspricht jede Textur einer solchen durch den Datensatz repräsentierten Fläche, auf der eine der Koordinaten des Mess-Koordinatensystems einen konstanten Wert hat. Ferner ist es vorteilhaft, wenn im Grafikbeschleuniger für jede Koordinate des Mess-Koordinatensystems jeweils ein Satz von Texturen angelegt wird, wobei innerhalb der Texturen, die zum gleichen Satz gehören, jeweils die gleiche Koordinate des Mess-Koordinatensystems einen konstanten Wert hat. Beispielsweise werden für eine x₁-Koordinate des Mess-Koordinatensystems mehrere x₁-Texturen angelegt. Die Daten innerhalb einer x₁-Textur gehören jeweils alle zu dem gleichen Wert für die x₁-Koordinate des Mess-Koordinatensystems, während sich Daten, die zu zwei verschiedenen x₁-Texturen gehören, durch den Wert der x₁-Koordinate unterscheiden, zu denen die Daten gehören. Der gesamte Satz der x₁-Texturen repräsentiert dann eine Mehrzahl von topologisch bezüglich dieser Koordinate x₁ geordneten Flächen, auf denen jeweils die Koordinate x₁ einen konstanten Wert hat. Durch diese Massnahme sind die Texturen an die Symmetrie des Mess-Koordinatensystems angepasst, wodurch das Erzeugen der bildlichen Darstellung einfacher wird und einen geringeren Rechenaufwand erfordert.

Zum Erzeugen der bildlichen Darstellung werden vorzugsweise alle Sätze von Texturen herangezogen, beispielsweise werden die Texturen aller Sätze gleichzeitig auf der Ausgabeeinheit projiziert, das heisst sie werden im selben Bild dargestellt, wobei ihre Intensitätsbeiträge summiert werden.

Vorzugsweise werden die mittels einer Textur generierten Flächen der bildlichen Darstellung jeweils bezüglich Ihrer Intensität mit einem Faktor gewichtet, in welchen die Orientierung der Fläche relativ zu der Betrachtungsrichtung eingeht. Durch eine solche trigonometrische Gewichtung lassen sich unerwünschte Streifenmuster in der bildlichen Darstellung deutlich reduzieren, welche durch die Abstände zwischen den Texturen zustande kommen.

Eine weitere vorteilhafte Massnahme besteht darin, dass Texturen, die einer gekrümmten oder krummlinig begrenzten Fläche entsprechen, in Subtexturen aufgeteilt werden. Das bedeutet, dass diejenigen Koordinaten des Mess-Koordinatensystems, die Kurven oder Krümmungen beschreiben, beispielsweise Winkelkoordinaten, lokal linearisiert werden. Die Flächen, die senkrecht auf der Richtung stehen, welche durch die lokal linearisierte Koordinate beschrieben wird, sind gekrümmte Flächen. Durch die lokale Linearisierung werden solche Flächen durch eine Mehrzahl ebener n-Ecke, z. B. Vierecke, approximiert dargestellt.

Um insbesondere bei semi-transparenten Darstellungen einen möglichst realistischen Tiefeneindruck in der Darstellung zu erzeugen, werden die einzelnen Texturen bevorzugt mit einer Tiefenabschwächung versehen dargestellt.

Zur weiteren Reduzierung der Streifenbildung in der erzeugten Darstellung ist es ferner vorteilhaft, wenn an den jeweils eine Kantenlinie bildenden Rändern von Texturen, die zum gleichen Satz von Texturen gehören, eine Abschlusstextur als Hülle aufgebracht wird, welche diese Ränder verbindet und in der Darstellung eine Modulation zwischen benachbarten Kantenlinien bewirkt. Durch diese Massnahme wird berücksichtigt, dass je nach Betrachtungsrichtung bzw. Perspektive die Ränder bzw. Kanten der einzelnen Texturen nicht mehr übereinander liegen. Dies führt zu Intensitätssprüngen in der Darstellung, weil in verschiedenen Bildbereichen eine unterschiedliche Anzahl Texturen sichtbar ist, oder anders ausgedrückt: der Beobachter schaut in verschiedenen Bildbereichen durch eine unterschiedliche Anzahl von Texturen. Die hierdurch verursachten Streifenmuster an den Übergängen zwischen verschiedenen Anzahlen von Texturen lassen sich durch die Massnahme der modulierten Abschlüsse, das heisst, das Aufbringen der Abschlusstexturen, wirkungsvoll unterbinden.

Bevorzugt steht die Abschlusstextur senkrecht auf den Rändern des an sie angrenzenden Satzes von Texturen, und enthält die Kantenlinien der an sie angrenzenden Texturen und bewirkt eine lineare Interpolation der Helligkeit zwischen benachbarten Kantenlinien. Dies lässt sich insbesondere dadurch realisieren, dass die Abschlusstextur erzeugt wird, indem die Kantentenlinien der angrenzenden Texturen identisch in die Abschlusstextur übernommen werden und vor jeder dieser Kantenlinien eine Linie der Helligkeit Null eingefügt wird. Dies ist eine besonders einfache und effiziente Methode zum Generieren der Abschlusstexturen, weil sie keinen zusätzlichen Rechenaufwand mit sich bringt. Die Funktion der linearen Interpolation, auch als lineares shading bezeichnet, zu der jeder Grafikbeschleuniger fähig ist, wird dann dazu genutzt, die modulierten Abschlüsse ohne zusätzlichen Aufwand zu realisieren.

Das erfindungsgemässe Verfahren eignet sich insbesondere für Datensätze, bei welchem das Mess-Koordinatensystem ein Zylinder- oder ein Kugelkoordinatensystem ist. Diese Koordinatensysteme stellen wichtige Anwendungen dar, weil viele der heute üblichen Abtastvorrichtungen in diesen Koordinatensystemen arbeiten.

In einer bevorzugten Anwendung des Verfahrens basiert der Datensatz auf Messwerten, welche die volumenaufgelöste Abtastung eines Körpers repräsentieren, und als bildliche Darstellung wird eine dreidimensionale, insbesondere semi-transparente, Darstellung des Körpers generiert. Aufgrund der enormen Schnelligkeit der Grafikbeschleuniger ermöglicht nämlich das erfindungsgemässe Verfahren die Visualisierung solcher Datensätze in Echtzeit, wobei es grundsätzlich egal ist, mittels welchem Abtastverfahren der Datensatz generiert wurde. Der Datensatz kann beispielsweise auf Ultraschall-Messwerten basieren, welche repräsentativ für die dreidimensionale Struktur eines Körpers sind.

In einer bevorzugten Anwendung wird das erfindungsgemässe Verfahren zum schnellen Generieren dreidimensionaler Darstellungen eines Körpers, insbesondere eines menschlichen Körpers oder Teilen davon, anhand von messtechnisch gewonnenen Abtastdaten verwendet. Im speziellen eignet sich das erfindungsgemässe Verfahren für medizinische Zecke. Durch seine Schnelligkeit, mit der eine dreidimensionale Echtzeit-Darstellung räumlich aufgelöster Datensätze realisierbar ist, ermöglicht das erfindungsgemässe Verfahren beispielsweise eine kontinuierliche, stets aktuelle dreidimensionale Darstellung von Organen des menschlichen Körpers, z. B. des schlagenden Herzens. Dies ist ein erheblicher Fortschritt für therapeutische oder diagnostische Prozeduren, bei welchen Instrumente, wie beispielsweise Katheter, im Innern eines menschlichen oder tierischen Körpers bzw. Organs lokalisiert und navigiert werden müssen.

Aber auch in anderen technischen Bereichen, z. B. bei der Darstellung von Radar-Messdaten, bei Fernabtastungen oder in der Materialprüfung kann das erfindungsgemässe Verfahren vorteilhaft verwendet werden.

Weitere vorteilhafte Massnahmen und bevorzugte Ausführungsformen der Erfindung ergeben sich aus den abhängigen Ansprüchen.

Im Folgenden wird die Erfindung anhand der Zeichnung und anhand von Ausführungsbeispielen näher erläutert. In der schematischen, nicht massstäblichen Zeichnung zeigen:
- Fig. 1:: eine Veranschaulichung eines Messvolumens und eines räumlich aufgelösten Datensatzes,
- Fig. 2:: eine schematische Darstellung eines Ausführungsbeispiels des erfindungsgemässen Verfahrens,
- Fig. 3:: eine durch eine z-Textur repräsentierte Fläche des Messvolumens,
- Fig. 4:: eine durch eine r-Textur repräsentierte Fläche des Messvolumens,
- Fig. 5:: eine durch eine ϑ-Textur repräsentierte Fläche des Messvolumens,
- Fig. 6:: eine Veranschaulichung einer Kompaktierung von r-Texturen,
- Fig. 7:: eine Veranschaulichung der Linearisierung der ϑ-Koordinate, und
- Fig. 8:: eine Veranschaulichung eines modulierten Abschlusses.

Mit dem erfindungsgemässen Verfahren wird ein räumlich aufgelöster Datensatz visualisiert, dessen Daten jeweils einem Volumenelement zugeordnet sind, dessen Lage durch Koordinaten in einem nicht-kartesischen Mess-Koordinatensystem beschrieben wird. Unter einem räumlich aufgelösten Datensatz wird ein Ensenmble von Daten verstanden, die in der Form M(x₁,x₂,x₃) vorliegen, wobei x₁,x₂ und x₃ die Koordinaten eines Volumenelements im Mess-Koordinatensystem sind und M(x₁,x₂,x₃) den Wert einer Grösse bezeichnet, der für dieses Volumenelement repräsentativ ist. Dieser Wert kann eine messtechnisch erfasste Grösse oder eine sonstige Information über das zugehörige Volumenelement sein. Grundsätzlich ist es für das erfindungsgemässe Verfahren egal, wie der räumlich aufgelöste Datensatz erstellt wurde.

Im Folgenden wird mit beispielhaftem Charakter auf den für die Praxis wichtigen Fall Bezug genommen, dass die Daten M(x₁,x₂,x₃) auf Messwerten beruhen, die aus einer volumenaufgelösten Abtastung eines Körpers resultieren, und dass aus diesen Daten eine dreidimensionale bildliche Darstellung dieses Körpers erzeugt werden soll. Mit "dreidimensionaler Darstellung" ist dabei gemeint, dass die Darstellung tatsächlich dreidimensional ist, oder, dass sie zwar eben ist, aber einen dreidimensionalen Eindruck vermittelt, z. B. mittels Methoden der räumlichen oder perspektivischen Darstellung oder der Projektion. Insbesondere können solche Darstellungen semi-transparent sein, sodass sie einen Einblick in den abgetasteten Körper gestatten. Auch sind solche ebenen Darstellungen, beispielsweise auf einem Bildschirm, gemeint, die bei Betrachtung mittels Hilfsvorrichtungen, wie beispielsweise einer Stereo-Brille, einen dreidimensionalen Eindruck vermitteln.

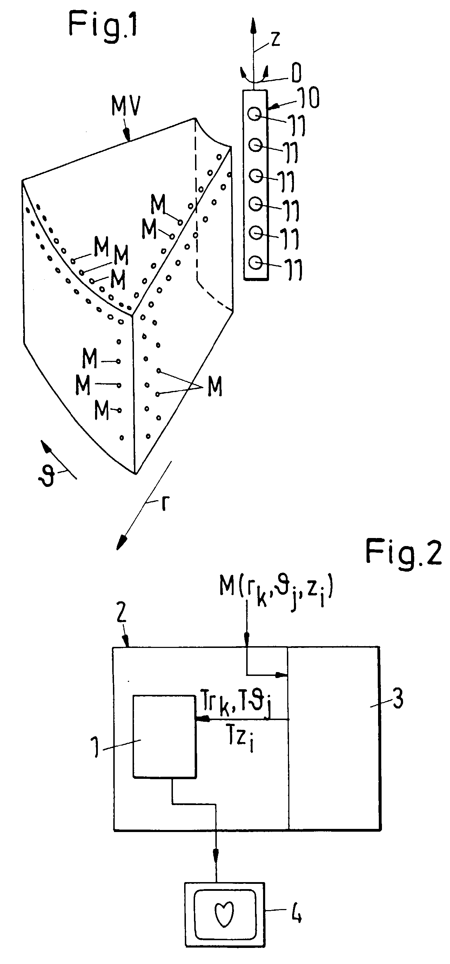

Im Folgenden wird die Erfindung anhand eines Ausführungsbeispiels erläutert, bei welchem der Datensatz auf Ultraschallmesswerten, typischerweise Echosignalen, basiert, die aus einer Ultraschallabtastung des abzubildenden Körpers resultieren. Der abzubildende Körper ist beispielsweise ein Herz, das mittels einer geeigneten Ultraschallsonde transösophagal abgetastet wurde. In Fig. 1 ist eine solche Ultraschallsonde angedeutet und mit dem Bezugszeichen 10 bezeichnet. Sie umfasst beispielsweise mehrere Ultraschallwandler 11, von denen mehrere bezüglich einer z-Achse benachbart zueinander angeordnet sind. Während des Betriebs wird die Ultraschallsonde um die Richtung der z-Achse geschwenkt oder rotiert, wie dies der Doppelpfeil D in Fig. 1 andeutet. Dabei werden die einzelnen Ultraschallwandler 11 im wesentlichen parallel betrieben, sodass das Herz gleichzeitig in mehreren parallelen Schichten, die jeweils senkrecht zur z-Achse liegen, über einen Winkelbereich oder Sektor mit Ultraschall abgetastet wird. Die Information bezüglich der dritten Dimension wird aus den Laufzeiten der Echosignale gewonnen. Die so gewonnenen volumenaufgelösten Messwerte liegen dann, gegebenenfalls nach einer signaltechnischen Vorverarbeitung, als ein räumlich aufgelöster Datensatz vor, der die Informationen bezüglich der abzubildenden Struktur enthält.

Durch die Ultraschallsonde 10 bzw. deren Arbeitsweise ist das Mess-Koordinatensystem, das heisst das Koordinatensystem, in welchem die Messwerte erfasst werden, vorgegeben. In dem hier beschriebenen Beispiel handelt es sich um ein Zylinderkoordinatensystem mit den Koordinaten z, ϑ und r. Dabei bezeichnet z die Koordinate bezüglich der z-Achse, ϑ als Winkelkoordinate den Azimutwinkel, der den Drehwinkel des Ultraschallwandlers 11 beschreibt, und r den radialen Abstand von der z-Achse. Das gesamte abgetastete Messvolumen MV ist ein Segment eines Kreiszylinders, wie es in Fig. 1 dargestellt ist. Die einzelnen diskreten Daten bzw. Messwerte M bilden in diesem Messvolumen MV ein Raster, wobei jeder Messwert M repräsentativ für ein Volumenelement des Messvolumens MV ist. In Fig. 1 sind beispielhaft nur einige der Messwerte M symbolisch durch die Punkte angedeutet. Die räumliche Lage dieses Volumenelements ist durch die Angabe seiner drei Koordinaten r, ϑ, z charakterisiert. Da die Messwerte M an diskreten räumlichen Punkten erfasst werden, können ihre jeweiligen Koordinaten auch als Indices rₖ, ϑⱼ, zᵢ aufgefasst werden, die das Volumenelement bezeichnen, welchem der jeweilige Messwert M zugeordnet ist. Abhängig von der örtlichen Auflösung des verwendeten Abtastsystems ist die Rasterung des Messvolumens MV gröber oder feiner. Die Anzahl der Messwerte M in r-, ϑ-, und z-Richtung wird mit p, m und l bezeichnet, das heisst der Laufindex k für die r-Richtung läuft von 1 bis p, der Laufindex j für die ϑ-Richtung läuft von 1 bis m und der Laufindex i für die z-Richtung läuft von 1 bis l. Insgesamt umfasst der räumlich aufgelöste Datensatz M(rₖ,ϑⱼ,zᵢ) also p·m·l einzelne Daten, die jeweils für ein Volumenelement des Messvolumens MV repräsentativ sind, und die gemeinsam ein dreidimensionales (p×m×l)-Array bilden. Ein solcher räumlich aufgelöster Datensatz M(rₖ,ϑⱼ,zᵢ,) dient bei dem hier beschriebenen Beispiel als Ausgangspunkt für das erfindungsgemässe Verfahren.

Erfindungsgemäss werden die Daten M(rₖ,ϑⱼ,zᵢ,) als Texturen in einen Grafikbeschleuniger (graphics engine) geladen. Grafikbeschleuniger (graphics engines) sind eine oder mehrere Grafikkarten umfassende Systeme in elektronischen Datenverarbeitungsanlagen, die der grafischen Darstellung auf einer Ausgabeeinheit, beispielsweise einem Bildschirm, dienen und die Primitive zeichnen können, womit gemeint ist, dass der Grafikbeschleuniger neben Punkten und Linien auch texturierte Polygone zeichnen kann. Eine Textur (texture map) ist ein im allgemeinen zweidimensionales Datenfeld, welches eine grafische Information über eine Fläche enthält. Die Textur repräsentiert eine Fläche, die von einem n-eckigen Polygon, dem sogenannten Quellpolygon, beispielsweise einem Viereck, begrenzt wird. Ein Grafikbeschleuniger im Sinne dieser Anmeldung kann solche ebenen, zweidimensionale Polygone mit Textur perspektivisch richtig auf einen Bildschirm projizieren. Dazu müssen dem Grafikbeschleuniger, beispielsweise von einem digitalen Signalprozessor (DSP) der Datenverarbeitungsanlage, lediglich die Bildschirmkoordinaten der n Eckpunkte der darzustellenden Fläche vorgegeben werden, also die Bildschirmkoordinaten der Eckpunkte des sogenannten Zielpolygons und der Grafikbeschleuniger projiziert dann die zugehörige Textur perspektivisch korrekt verzerrt so auf den Bildschirm, dass die Ecken der darzustellenden Fläche auf den vorgegebenen Bildschirmkoordinaten liegen. Die Anzahl der Ecken des Zielpolygons ist dabei immer die gleiche wie die des Quellpolygons, jedoch ist das Zielpolygon - und damit die von ihm eingeschlossene Fläche - im allgemeinen gegenüber dem Quellpolygon verzerrt, beispielsweise kann aus einem Quellpolygon, welches ein Quadrat ist, in der bildlichen Darstellung auf dem Bildschirm ein Trapez als Zielpolygon werden. Bekannte Grafikbeschleuniger projizieren eine diskrete Textur mittels Interpolation auf den Bildschirm. Im Handel sind zahlreiche solcher Grafikbeschleuniger erhältlich, die beispielsweise in Personal Computern (PC) oder Workstations zum perspektivischen Darstellen von Objektoberflächen im Raum dienen. Beispielsweise geeignet sind die kommerziell erhältlichen Grafikbeschleuniger "Viper 550" von Diamond, "Velocity" von SBT, "Fury Rage" von ATI oder "Voodoo III von 3dfx. Solche bekannten Grafikbeschleuniger können typischerweise mindestens 10⁷-10⁸ Interpolationen pro Sekunde durchführen.

In Fig. 2 ist ein bevorzugtes Ausführungsbeispiel des erfindungsgemässen Verfahrens symbolisch veranschaulicht. Dabei ist mit dem Bezugszeichen 2 eine elektronische Datenverarbeitungsanlage bezeichnet, welcher der Datensatz M(rₖ,ϑⱼ,zᵢ,) zugeführt werden. Ein digitaler Signalprozessor 3 der Datenverarbeitungsanlage 2 erstellt aus den Daten M(rₖ,ϑⱼ,zᵢ,) in weiter hinten noch erläuterter Weise mehrere Texturen Trₖ, Tϑⱼ, Tzᵢ, welche in einen Grafikbeschleuniger 1 geladen werden. Zur Erzeugung der bildlichen Darstellung projiziert der Grafikbeschleuniger 1 die Texturen Trₖ, Tϑⱼ, Tzᵢ auf eine Ausgabeeinheit 4, beispielsweise einen Bildschirm.

Erfindungsgemäss werden also die Daten M(rₖ,ϑⱼ,zᵢ,) des räumlich aufgelösten Datensatzes als Texturen Trₖ, Tϑⱼ, Tzᵢ in den Grafikbeschleuniger 1 geladen. Es wird eine Betrachtungsrichtung vorgegeben, aus welcher der darzustellende Körper betrachtet werden soll, das heisst in der zu erzeugenden bildlichen Darstellung wird der Körper so abgebildet, wie es einem Anblick oder Einblick aus dieser Betrachtungsrichtung entspricht. Abhängig von der vorgegebenen Betrachtungsrichtung werden dann mehrere Texturen perspektivisch korrekt auf den Bildschirm 4 projiziert und überlagert. Dazu ist es - wie bereits erwähnt - jeweils nur notwendig, die Eckpunkte der Textur perspektivisch zu transformieren. Jede Textur entspricht einem zweidimensionalen Bild. Diese zweidimensionalen Bilder werden auf dem Bildschirm übereinander gezeichnet, woraus sich eine semi-transparente, dreidimensionale bildliche Darstellung des Körpers ergibt. Die bildliche Darstellung ist also eine Überlagerung mehrerer zweidimensionaler Bilder, von denen jedes einer Textur entspricht, die auf den Bildschirm projiziert wird.

Im Falle eines räumlich aufgelösten Datensatzes, der in kartesischen Koordinaten vorliegt, ist es relativ einfach, durch Überlagern einzelner zweidimensionaler Bilder bzw. einzelner Texturen eine dreidimensionale Darstellung zu generieren. Das Messvolumen wird entlang der Achse, welche am stärksten der Betrachtungsrichtung entspricht, in zweidimensionale Texturen aufgeteilt, das heisst der Datensatz wird in Betrachtungsrichtung als ein Stapel hintereinander liegender, zweidimensionaler Texturen interpretiert, die jeweils als perspektivisches Rechteck mit der entsprechenden Textur gezeichnet und überlagert werden. Die Achse, welche der Betrachtungsrichtung am ähnlichsten ist, hat z. B die Richtung desjenigen Vektors, dessen Skalarprodukt mit dem Richtungsvektor der Betrachtungsrichtung maximal ist. Um bei der Überlagerung der einzelnen Texturen den Effekt der Tiefenabschwächung zu berücksichtigen, sind Verfahren bekannt, beispielsweise das sogenannte Alpha-Blending, bei dem jede gezeichnete Textur die Intensität der an dieser Stelle bereits vorhandenen Textur um einen Faktor q abschwächt, der kleiner als 1 ist.

Die vorangehend beschriebene Vorgehensweise lässt sich jedoch in der Form nicht auf Datensätze M(rₖ,ϑⱼ,zᵢ,) anwenden, die in nicht-kartesischen Mess-Koordinatensystemen vorliegen, weil dann im allgemeinen keine Hauptachse, z. B. eine Koordinatenachse, im Mess-Koordinatensystem existiert, die in allen Punkten des Messvolumens MV der Betrachtungsrichtung am ähnlichsten ist. Der Grund hierfür ist, dass in nicht-kartesischen Koordinatensystemen in der Regel mindestens eine Koordinate existiert, deren zugehöriger Basisvektor, kartesisch betrachtet, ortsabhängig ist. Beispielsweise ändert in den hier betrachteten Zylinderkoordinaten der zur r-Koordinate gehörige Basisvektor seine Richtung in Abhängigkeit von ϑ.

Im Folgenden wird nun ein bevorzugtes Ausführungsbeispiel des erfindungsgemässen Verfahrens beschrieben, mit dem der räumlich aufgelöste Datensatz M(rₖ,ϑⱼ,zᵢ,), der im nicht-kartesischen Zylinderkoordinatensystem vorliegt, mittels des Grafikbeschleunigers 1 visualisiert werden kann.

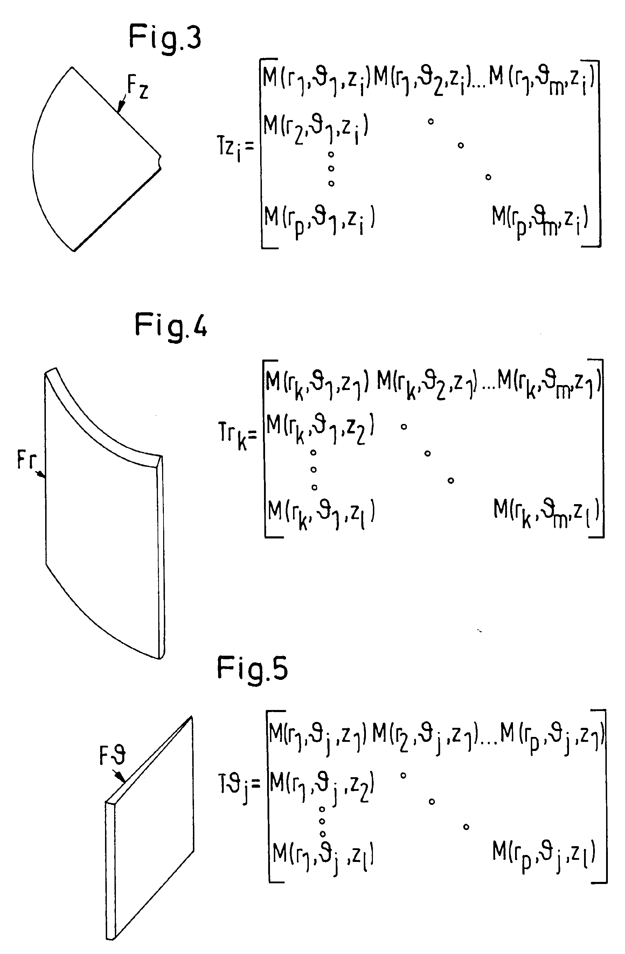

Zunächst wird anhand des Datensatzes M(rₖ,ϑⱼ,zᵢ,) für jede Koordinate r, ϑ, z ein Satz von Texturen angelegt, die entsprechend der jeweiligen Koordinate als r-Texturen, ϑ-Texturen und z-Texturen bezeichnet werden. Eine z-Textur wird z. B. generiert, indem alle Daten des Datensatzes M(rₖ,ϑⱼ,zᵢ,), die zu dem gleichen Wert der z-Koordinate gehören, zu einer zweidimensionalen Matrix zusammengefasst werden, das heisst innerhalb einer z-Textur hat die z-Koordinate einen konstanten Wert. Eine solche z-Textur repräsentiert eine Fläche Fz bzw. eine Schicht des Messvolumens MV, auf welcher die z-Koordinate konstant ist, also eine Fläche Fz bzw. Schicht des Messvolumens MV, die senkrecht auf der z-Achse steht. Diese im Folgenden als Koordinatenfläche bezeichnete Fläche Fz ist in Fig. 3 in einer Aufsicht dargestellt. Für jeden der l diskreten z-Werte zᵢ, zu denen die Daten des Datensatzes M(rₖ,ϑⱼ,zᵢ,) gehören, wird eine z-Textur Tzᵢ angelegt, welche die Form einer Matrix Tzᵢ=[M(rₖ,ϑⱼ,zᵢ,)] hat, wobei k von 1 bis p läuft, j von 1 bis m und i einen konstanten Wert hat. Die Textur Tzᵢ ist in Fig. 3 ebenfalls angegeben, sie umfasst k·j Werte des Datensatzes M(rₖ,ϑⱼ,zᵢ,), die auch als Pixel der Textur bezeichnet werden. Insgesamt werden also l solche z-Texturen angelegt, die gemeinsam den Satz von z-Texturen bilden.

In sinngemäss gleicher Weise werden ein Satz von r-Texturen, der p Texturen umfasst, nämlich für jeden Wert von k=1 bis k=p jeweils eine, und ein Satz von ϑ-Texturen, der m Texturen umfasst, nämlich für jeden Wert von j=1 bis j=m jeweils eine, angelegt. Eine r-Textur Trₖ hat die Form einer Matrix Trₖ=[M(rₖ,ϑⱼ,zᵢ,)], wobei j von 1 bis m läuft, i von 1 bis l und k einen konstanten Wert hat. Eine r-Textur umfasst also m·l Daten des Datensatzes M(rₖ,ϑⱼ,zᵢ,). In Fig. 4 ist zur Veranschaulichung die durch eine r-Textur repräsentierte Koordinatenfläche Fr des Messvolumens MV dargestellt und die r-Textur Trₖ angegeben. Eine ϑ-Textur Tϑⱼ hat die Form einer Matrix Tϑⱼ=[M(rₖ,ϑⱼ,zᵢ,)], wobei k von 1 bis p läuft, i von 1 bis l und j einen konstanten Wert hat. Eine ϑ-Textur umfasst also p·j Daten des Datensatzes M(rₖ,ϑⱼ,zᵢ,). In Fig. 5 ist zur Veranschaulichung die durch eine ϑ-Textur repräsentierte Koordinatenfläche Fϑ des Messvolumens MV dargestellt und die ϑ-Textur Tϑⱼ angegeben.

Das Anlegen der Texturen erfolgt vorzugsweise im digitalen Signalprozessor (DSP) 3 (Fig. 2) der Datenverarbeitungsanlage 1. Die Texturen Trₖ, Tϑⱼ, Tzᵢ werden dann anschliessend an den Grafikbeschleuniger 1 übergeben.

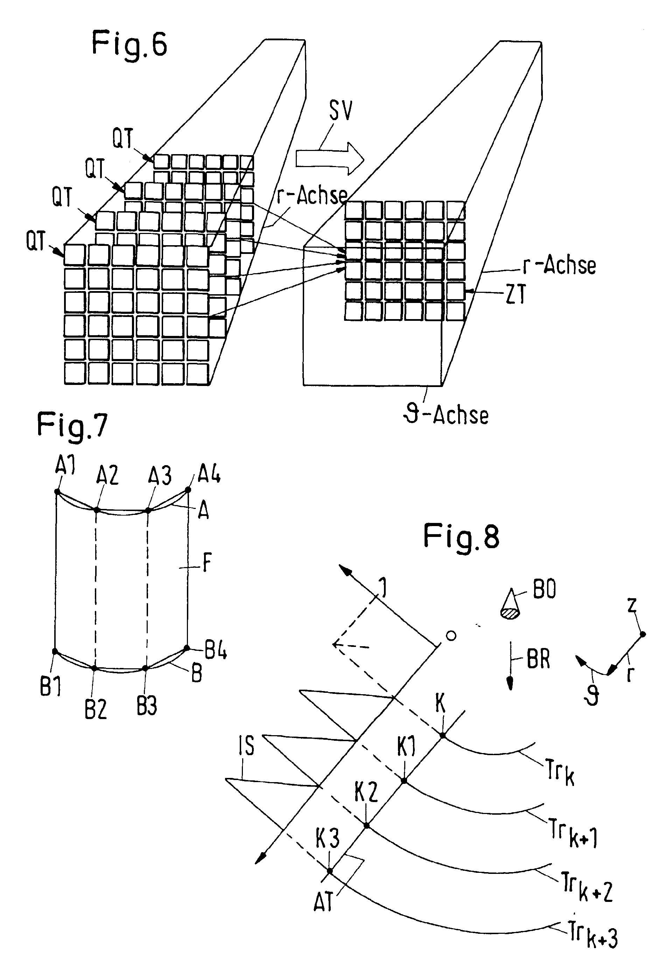

Häufig ist es der Fall, dass die räumliche Auflösung des Datensatzes M(zᵢ, ϑⱼ, rₖ) in den drei Koordinatenrichtungen z, ϑ, r sehr unterschiedlich ist. Bei einer Ultraschallsonde 10, wie sie in Fig. 1 dargestellt ist, kann beispielsweise p=256, m=64 und l=24 sein. Da die Dimensionen des Messvolumens MV in den drei Koordinatenrichtungen meist vergleichbar gross sind, resultiert eine starke Anisotropie der Auflösung, die insbesondere im Hinblick auf den Rechenaufwand negativ ist. Kartesisch betrachtet, variiert nämlich die Auflösung in Abhängigkeit von der r-Richtung. Da der Körper aber so abgetastet werden muss, dass auch bei der gröbsten Auflösung die Abtastpunkte noch genügend dicht liegen, resultiert in den feiner aufgelösten Bereichen des Körpers eine Über-Abtastung, die einen unnötigen Rechenaufwand mit sich bringt. Ferner kann eine zu hohe Auflösung in einer Koordinatenrichtung neben der Erhöhung der Rechenzeit auch zu Qualitätsverlusten in der zu erzeugenden bildlichen Darstellung führen. Werden beispielsweise 256 r-Texturen übereinander liegend dargestellt und dabei zur Tiefenabschwächung das Verfahren des Alpha-Blending verwendet, so führt dies insbesondere durch Rundungsfehler bedingt zu einem nicht unerheblichen Genauigkeitsverlust in der Farb- bzw. Helligkeitsinformation für die Beiträge, die von den in der Darstellung am weitesten hinten liegenden Daten kommen. Deshalb ist es vorteilhaft, vor dem Erzeugen der eigentlichen bildlichen Darstellung die Anzahl der Texturen, insbesondere derer, von denen sehr viele existieren (hier die r-Texturen), durch eine Kompaktierung zu reduzieren. Eine bevorzugte Ausführungsform dieser Kompaktierung wird nun anhand der r-Texturen und anhand von Fig. 6 erläutert.

Zur Kompaktierung der r-Texturen wird jeweils eine feste Anzahl q der ursprünglich angelegten r-Texturen (Quelltexturen QT) auf eine einzige neue r-Textur (Zieltextur ZT) projiziert. Wählt man beispielsweise q=4 oder q=8, reduziert sich die Anzahl p der r-Texturen von 256 auf 64 bzw. 32. Diese Projektion erfolgt in der Betrachtungsrichtung. Die q Quelltexturen QT werden entlang eines mittleren Sehvektors SV projiziert. Dieser Sehvektor SV ist der Vektor, der zwischen die Augen des Betrachters zeigt. Die Projektion wird vorzugsweise im DSP durchgeführt und erfolgt pixelweise. Dabei wird jeweils nur der Teil eines Pixels der Quelltextur QT in den entsprechenden Pixel der Zieltextur ZT aufgenommen, der den Pixel der Zieltextur ZT in Projektionsrichtung gesehen überdeckt. Da der Projektionsvorgang zweidimensional ist, wird ein Pixel der Quelltextur QT jeweils aufgeteilt und zu mehreren, typischerweise vier, Pixeln der Zieltextur ZT addiert. Dieser Vorgang wird als bilineare Filterung oder bilineare Interpolation bezeichnet.

Im Folgenden sind Bezugnahmen auf die Texturen bzw. auf die Sätze von Texturen so zu verstehen, dass damit sowohl die ursprünglichen Texturen als auch die aus einer Kompaktierung hervorgegangenen gemeint sein können, das heisst es wird nicht mehr zwischen ursprünglichen Texturen und aus einer Kompaktierung hervorgegangen Texturen unterschieden, weil es für das weitere Verständnis unerheblich ist.

Da bekannte Grafikbeschleuniger nur ebene Polygone mit Textur zeichnen können, wird jede Koordinate des Mess-Koordinatensystems, die eine gekrümmte Linie beschreibt, lokal linearisiert, indem diese Koordinate in einem vorgebbaren Raster vereinfacht wird.

Im Zylinderkoordinatensystem beschreibt die Winkelkoordinate ϑ eine gekrümmte Linie. Dadurch sind die Koordinatenflächen, welche senkrecht auf der ϑ-Richtung stehen, nicht mehr durch ebenen Polygone begrenzt. Die Koordinatenflächen für die r-Koordinate, welche durch die r-Texturen beschrieben werden, sind gekrümmte Vierecke, nämlich Teile eines Zylindermantels (siehe Fig. 4) Die Koordinatenflächen für die z-Koordinate, welche durch die z-Texturen beschrieben werden, sind im wesentlichen Kreissegmente, also geometrische Figuren, die gekrümmte Begrenzungslinien aufweisen (siehe Fig. 3). Solche Flächen, die gekrümmt oder krummlinig begrenzt sind, können aber von heute bekannten Grafikbeschleunigern nicht dargestellt werden, weil sie nicht durch ein ebenes Polygon begrenzt werden. Deshalb wird für die Darstellung dieser Flächen die ϑ-Koordinate in einem vorgebbaren Raster vereinfacht, was anhand eines Beispiels für die Darstellung einer r-Textur erläutert werden soll.

Fig. 7 zeigt die durch eine r-Textur Trₖ repräsentierte gekrümmte Fläche F des Messvolumens MV, die zwei gekrümmte Begrenzungslinien A und B aufweist. Die gekrümmten Begrenzungslinien A und B, welche die Eckpunkte A1 und A4 bzw. B1 und B4 der Fläche F verbinden, werden jeweils durch einen Streckenzug A1 A2 A3 A4 bzw. B1 B2 B3 B4 ersetzt, wobei die Zwischenpunkte A2,A3 bzw. B3,B4 auf der Begrenzungslinie A bzw. B. liegen. Die Punkte A1,A2,A3,A4 werden jeweils geradlinig miteinander verbunden. Gleiches gilt für die Punkte B1 ,B2,B3,B4. Dies entspricht einer lokalen Linearisierung der Koordinate ϑ. Bei der Erzeugung der bildlichen Darstellung werden dann anstelle der Fläche F drei ebene Vierecke gezeichnet, nämlich das Viereck mit den Eckpunkten A1,A2,B2,B1, das Viereck mit den Eckpunkten A2,A3,B3,B2 und das Viereck mit den Eckpunkten A3,A4,B4,B3. In sinngemäss gleicher Weise werden auch die durch die z-Texturen beschriebenen krummlinig begrenzten Flächen durch mehrere ebene Vierecke approximiert dargestellt. Es versteht sich, dass in der Praxis die Rasterung der ϑ-Koordinate feiner gewählt wird als die hier aus Gründen der Einfachheit beschriebene Rasterung mit nur zwei Zwischenpunkten A2,A3 bzw. B2,B3.

Auf die Texturen bezogen bedeutet die vorangehend beschriebene lineare Aufteilung, dass die Texturen, die einer gekrümmten oder einer krummlinig begrenzten Fläche entsprechen, zu ihrer Darstellung jeweils in mehrere Subtexturen aufgeteilt werden. In dem erläuterten Beispiel wird die r-Textur Trₖ, welche die Fläche F (Fig. 7) repräsentiert, in drei Subtexturen aufgeteilt. Die ersten p/3 Spalten der r-Textur Trₖ bilden die erste Subtextur, die zweiten p/3 Spalten bilden die zweite Subtextur, und die letzten p/3 Spalten bilden die dritte Subtextur. Z. B. umfasst dann die erste Subtextur der r-Textur Trₖ die Daten oder Pixel M(rₖ,ϑⱼ,zᵢ,) mit j=1 bis j=p/3 und i=1 bis i=l. Zur Darstellung der r-Textur Trₖ werden dann die einzelnen Subtexturen von dem Grafikbeschleuniger projiziert, wobei für jede Subtextur ein Viereck als Quellpolygon vorgegeben wird, sodass die durch die r-Textur Trₖ beschriebene Fläche durch drei Vierecke approximiert dargestellt wird.

Zum Erzeugen der grafischen Darstellung bezüglich der gewünschten Betrachtungsrichtung werden dem Grafikbeschleuniger 1 für jede Textur bzw. jede Subtextur die Bildschirmkoordinaten der perspektivisch transformierten Eckpunkte der Textur bzw. Subtextur übermittelt. Der Grafikbeschleuniger 1 zeichnet dann die texturierten Polygone perspektivisch korrekt auf den Bildschirm. Im Falle des hier beschriebenen Datensatzes M(rₖ,ϑⱼ,zᵢ,), der in Zylinderkoordinaten vorliegt, wird vorzugsweise für jede Textur bzw. Subtextur ein Viereck als Quellpolygon vorgegeben, sodass der Grafikbeschleuniger nur texturierte Vierecke auf den Bildschirm projizieren muss. Auf dem Bildschirm werden die einzelnen Texturen, die jeweils zweidimensionale Bilder darstellen, überlagert dargestellt, sodass sich eine dreidimensionale, semi-transparente bildliche Darstellung des abzubildenden Körpers ergibt.

Vorzugsweise werden zum Erzeugen der bildlichen Darstellung alle Sätze von Texturen herangezogen. Der Grafikbeschleuniger projeziert dazu z. B. alle r-Texturen, alle ϑ-Texturen und alle z-Texturen einander überlagert auf den Bildschirm. Um Störungen wie Streifenmuster in der bildlichen Darstellung zu reduzieren, die daraus resultieren können, dass die einzelnen Flächen nicht parallel zur Bildschirmebene sind, und daher an den Rändern der Flächen durch eine unterschiedliche Anzahl von Flächen geschaut wird, wird vorzugsweise jede mittels einer Textur generierte Fläche der bildlichen Darstellung mit einem Faktor gewichtet, in welchen die Orientierung dieser Fläche relativ zur Betrachtungsrichtung eingeht. Eine Möglichkeit hierfür ist eine trigonometrische Gewichtung der Fläche. Dazu wird z. B. für jede dazustellende Fläche die Helligkeit der Fläche mit einem Faktor multiplziert, welcher das Quadrat des Skalarprodukts aus dem Normalenvektor dieser Fläche und dem normierten Richtungsvektor der Betrachtungsrichtung ist. Da die drei zu den Koordinaten r, ϑ, z des Mess-Koordinatensystems gehörenden Basisvektoren lokal immer paarweise senkrecht aufeinander stehen, hat diese Gewichtung den Vorteil, dass die bildliche Darstellung bezüglich ihrer Intensität bei einer Änderung der Betrachtungsrichtung nicht variiert und nicht heller wird als z. B. im kartesischen Fall, weil die Quadrate aller drei Skalarprodukte aus einem Basisvektor und dem Richtungsvektor der Betrachtungsrichtung in der Summe stets eins ergeben.

Natürlich sind auch solche Verfahrensführungen möglich, bei denen nicht alle Sätze von Texturen bzw. nicht alle Texturen zur Erzeugung der bildlichen Darstellung überlagert werden. Stimmt beispielsweise die gewählte Betrachtungsrichtung zumindest annähernd mit einer Koordinatenrichtung des Mess-Koordinatensystems überein, so ist es grundsätzlich auch möglich, nur die zu dieser Koordinate gehörenden Texturen zum Erzeugen der bildlichen Darstellung zu überlagern. Ist z. B. die Betrachtungsrichtung im wesentlichen die Richtung der z-Achse (gemäss der Darstellung in Fig. 1 entspricht dies beispielsweise einem Anblick auf das Messvolumen MV von oben oder von unten), so kann die bildliche Darstellung auch so erzeugt werden, dass nur die z-Texturen überlagert auf den Bildschirm projiziert werden.

Um einen korrekten Tiefeneindruck in der bildlichen Darstellung zu erzeugen, werden die einzelnen Texturen vorzugsweise mit einer Tiefenabschwächung versehen dargestellt. Hierfür geeignet sind beispielsweise das Alpha-Blending-Verfahren und das Depth-Cueing-Verfahren.

Insbesondere in der bevorzugten Verfahrensführung, bei der alle Sätze von Texturen, das heisst die Texturen aller drei Koordinaten r, ϑ, z, dargestellt werden, erfolgt die Tiefenabschwächung vorzugsweise nach dem Depth-Cueing-Verfahren, weil die dargestellten Texturen dann nicht mehr von hinten nach vorne sortiert werden müssen. Die Tiefenabschwächung, mit der die einzelnen Texturen dargestellt werden, erfolgt vor der eigentlichen Projektion der Texturen. Hierzu wird bevorzugt zunächst die Projektion der äusseren Hülle des Messvolumens MV ermittelt, was relativ einfach ist, denn die äussere Hülle des Messvolumens MV ist z. B. für dir r-Richtung durch die r-Textur Trₚ, also die r-Textur, die zum grössten Wert für r, nämlich rₖ=rₚ, gehört, gegeben. Dann wird für alle Daten M(rₖ,ϑⱼ,zᵢ,) des Datensatzes jeweils ermittelt, wie gross in der Betrachtungsrichtung der Abstand der einzelnen Daten von der Hülle des Messvolumens MV ist. Die Helligkeit bzw. die Intensität, mit der die einzelnen Daten dargestellt werden, ergibt sich dann durch eine Gewichtung mit einer Funktion, die vom Abstand zur Hülle des Messvolumens MV abhängig ist. Diese Funktion für die Tiefenabschwächung kann beispielsweise eine exponentielle Abnahme mit der Tiefe sein.

Gemäss einer bevorzugten Ausführungsform des erfindungsgemässen Verfahrens, werden die Texturen, mit denen die bildliche Darstellung erzeugt wird, mit modulierten Abschlüssen versehen. Durch diese Massnahme lassen sich Störungen in der bildlichen Darstellung, die insbesondere auf der diskreten Natur der einzelnen projizierten Flächen beruhen, z. B. Streifenmuster, wirkungsvoll unterdrücken. Da im allgemeinen in der Betrachtungsrichtung die Ecken von projizierten Texturen, die zum gleichen Satz von Texturen gehören, nicht mehr übereinander liegen bzw. nicht mehr miteinader fluchten, kann es zu Unregelmässigkeiten wie Intensitätssprüngen in der bildlichen Darstellung kommen, denn in verschiedenen Bildbereichen der Darstellung ist eine unterschiedliche Anzahl von Texturen dieses Satzes sichtbar. Anders ausgedrückt, schaut der Beobachter in verschiedenen Bildbereichen durch eine unterschiedliche Anzahl von Texturen. Die hierdurch verursachten Störungen wie Streifenmuster lassen sich durch die Massnahme der modulierten Abschlüsse wirkungsvoll unterbinden. Im Folgenden wird anhand von Fig. 8 erläutert, wie die modulierten Abschlüsse vorzugsweise realisiert werden.

Die modulierten Abschlüsse werden vorzugsweise so realisiert, dass an den jeweils eine Kantenlinie bildenden Rändern von Texturen, die zum gleichen Satz von Texturen gehören, eine Abschlusstextur als Hülle aufgebracht wird. Diese Abschlusstextur verbindet die Ränder und bewirkt in der Darstellung eine Modulation zwischen benachbarten Kantenlinien. Dies wird nun beispielhaft anhand der r-Texturen Trₖ erläutert. Es versteht sich, dass auch die beiden anderen Sätze von Texturen, nämlich die ϑ-Texturen und die z-Texturen, in sinngemäss gleicher Weise mit entsprechenden Abschlusstexturen abgeschlossen werden können.

Fig. 8 zeigt die r-Texturen Trₖ bis Trₖ₊₃ in einer Aufsicht aus der z-Richtung. Aus Gründen der besseren Übersicht und weil es für das Verständnis ausreicht, sind nur vier der insgesamt p r-Texturen dargestellt. Ferner sind in Fig. 8 die Betrachtungsrichtung durch den Pfeil BR, der Beobachter BO und das Mess-Koordinatensystem mit den Koordinaten r,ϑ,z angedeutet. Die z-Achse steht senkrecht auf der Zeichenebene.

Jede der r-Tekturen Trₖ bis Trₖ₊₃ hat einen Rand, welcher durch eine in Richtung der z-Achse verlaufende Kantenlinie K,K1,K2 bzw. K3 gebildet wird. In der Matrixschreibweise für die r-Texturen Trₖ (siehe Fig. 4) sind diese Kantenlinien K,K1,K2,K3 die jeweils letzten Spalten der r-Texturen Trₖ bis Trₖ₊₃ (bei einer anderen Festlegung des Mess-Koordinatensystems können es natürlich auch die ersten Spalten sein). Die Kantenlinie K ist also ein Spaltenvektor K=(M(rₖ,ϑₘ,zᵢ)), wobei k konstant ist, der Laufindex j für die 9-Koordinate seinen Maximalwert m hat und i von 1 bis l läuft. Analog ist die Kantenlinie K1 ein Spaltenvektor K1=(M(rₖ₊₁,ϑₘ,zᵢ)), wobei der Laufindex für die r-Richtung den konstanten Wert k+1 hat und i von 1 bis l läuft. In gleicher Weise sind K2 und K3 Spaltenvektoren, in denen der Laufindex für die r-Koordinate den Wert k+2 bzw. k+3 hat.

Die Abschlusstextur AT, welche auf die Kantenlinien K,K1,K2,K3 aufgebracht wird, ist im wesentlichen gleich der Textur einer zu den r-Texturen Trₖ bis Trₖ₊₃ senkrechten Ebene, mit dem Unterschied, dass die Abschlusstextur AT mit einer Intensitätsfunktion IS moduliert dargestellt wird. Die Intensitätsfunktion IS ist eine Sägezahnfunktion, die zwischen den einzelnen r-Texturen oszilliert. Auf der dem Beobachter BO zugewandten Seite einer r-Textur hat die Intensitätsfunktion IS den Wert 0 und steigt dann mit zunehmendem Abstand vom Beobachter BO linear an bis zum Wert 1, den sie an der nächsten r-Textur erreicht. Dort springt die Intensitätsfunktion IS wieder auf den Wert Null usw. Die Abschlusstextur AT steht also senkrecht auf den Rändern der an sie angrenzenden r-Texturen Trₖ bis Trₖ₊₃, ist an diesen Rändern identisch mit den Kantenlinien K,K1,K2,K3 und bewirkt eine lineare Interpolation der Helligkeit bzw. Intensität zwischen benachbarten Kantenlinien. Durch diese Massnahme werden Intensitätssprünge und Streifenmuster effizient unterdrückt.

Vorzugsweise wird die Abschlusstextur AT generiert, indem die Kantenlinien K,K1,K2,K3 der angrenzenden r-Tekturen identisch in die Abschlusstextur AT übernommen werden und vor jeder der Kantenlinien K,K1,K2,K3 eine Linie der Helligkeit Null bzw. Intensität Null eingefügt wird. Die Abschlusstextur AT hat dann in Matrixschreibweise das folgende Aussehen:
AT=[... 0 K 0 K1 0 K2 0 K3 ...]
wobei 0 ein Spaltenvektor mit l Komponenten ist, die alle gleich Null sind (l-komponentiger Nullvektor).

Ein besonderer Vorteil einer solchen Abschlusstextur AT ist es, dass der Grafikbeschleuniger bei der Darstellung der Abschlusstextur AT aufgrund seiner bilinearen Filterfunktion automatisch die gewünschte Modulation erzeugt. Der Grafikbeschleuniger interpoliert bei der Darstellung der Abschlusstextur jeweils zwischen einer farblosen Linie, nämlich dem Nullvektor 0, und der jeweils nächsten Kantenlinien K,K1,K2 oder K3. Dadurch entspricht die Darstellung der Abschlusstextur AT auf den Kantenlinien K,K1,K2,K3 jeweils der Darstellung der angrenzenden r-Textur Trₖ bis Trₖ₊₃ und ist senkrecht zu den Kantenlinien K,K1,K2,K3 linear in ihrer Helligkeit moduliert, sodass die gewünschte Modulation quasi von selbst entsteht.

Besonders vorteilhaft an dieser Art der modulierten Abschlüsse ist, dass die Abschlusstexturen AT ohne zusätzlichen Rechenaufwand generierbar sind, denn die Abschlusstextur enthält nur die bereits bekannten Kantenlinien K,K1,K2,K3 der an sie angrenzenden r-Texturen und die Nullvektoren 0. Somit ist die Abschlusstextur ohne Rechenaufwand durch einfaches Kopieren der Kantenlinien K,K1,K2,K3 und das Einfügen der Nullvektoren generierbar. Zudem bedarf auch die Modulation keines zusätzlichen Rechenaufwands, denn sie kann in einfacher Weise durch eine lineare Interpolation realisiert werden. Diese Funktion der linearen Interpolation, die auch als lineares Shading bezeichnet wird, beherrscht jeder Grafikprozessor inhärent.

Es versteht sich, dass auch an den anderen Rändern der r-Texturen, also z. B. an den Kantenlinien, für die ϑⱼ=ϑ₁ ist, in sinngemäss gleicher Weise eine Abschlusstextur aufgebracht wird.

Durch die Erfindung wird also ein besonders schnelles Verfahren zur Visualisierung eines räumlich aufgelösten Datensatzes M(rₖ,ϑⱼ,zᵢ,) bereitgestellt, das es ermöglicht, aus dem Datensatz M(rₖ,ϑⱼ,zᵢ,), der z. B. ein (256×64×20)-Array ist, mittels heute bekannter, handelsüblicher Grafikbeschleuniger in einer so kurzen Zeit eine dreidimensionale bildliche Darstellung zu generieren, dass Bildraten von 20 Bildern pro Sekunde oder mehr realisierbar sind. Somit kann man in den Bereich der Videofrequenzen gelangen.

Es versteht sich, dass der Datensatz M(rₖ,ϑⱼ,zᵢ,) vor, während oder nach seiner Visualisierung zusätzlichen signaltechnischen Bearbeitungen wie beispielsweise Filterungen, Verstärkungen, Einfärbungen oder Prozeduren zum Berechnen von Beleuchtungseffekten (Shading-Prozeduren) unterzogen werden kann. Zum Berechnen von Beleuchtungseffekten sind beispielsweise sogenannte Gradienten-Render-Verfahren wie das Torrance-Verfahren, das Phong-Verfahren oder Modifikationen dieser Verfahren geeignet. Diese an sich bekannten Verfahren werden dann an das nicht-kartesische Mess-Koordinatensystem angepasst.

Mit dem erfindungsgemässen Verfahren lassen sich insbesondere Datensätze M(rₖ,ϑⱼ,zᵢ,), die auf Messwerten basieren, welche aus einer volumenaufgelösten Abtastung eines Körpers basieren, als dreidimensionale, semitransparente bildliche Darstellungen des Körpers visualisieren. Dabei ist es für das erfindungsgemässe Verfahren egal, auf welche Weise oder mit welcher Abtastvorrichtung der Datensatz erstellt wurde. Es eignet sich also beispielsweise zur Visualisierung von Ultraschalldaten, tomografischen Daten, Röntgen-Daten, Radar-Daten oder Kernspinresonanz-Daten, die aus einer messtechnischen Abtastung gewonnen wurden.

Durch seine enorme Schnelligkeit, die auf der gezielten und optimalen Nutzung der Fähigkeiten des Grafikbeschleunigers beruht, ist das Verfahren insbesondere für aufwendige Echtzeit-Anwendungen geeignet. Ein spezielles Anwendungsbeispiel aus der Medizinaltechnik ist das schnelle Generieren dreidimensionaler Darstellungen eines menschlichen Körpers, eines Organs oder sonstigen Teilen des menschlichen Körpers anhand von messtechnisch gewonnenen Abtastdaten. So ermöglicht das erfindungsgemässe Verfahren z. B. eine dreidimensionale "on-line"-Einsicht in Organe.

Speziell in der Kardiologie ist es möglich, eine kontinuierliche, stets aktuelle Sicht in das schlagende Herz eines Patienten zu gewährleisten, indem transösophagal erfasste, volumenaufgelöste Ultraschallmessdaten mittels des erfindungsgemässen Verfahrens in Echtzeit in eine dreidimensionale, semitransparente Darstellung des Herzens transformiert werden. Da das erfindungsgemässe Verfahren mit heute bekannten Grafikbeschleunigern Bildraten von 20 Bildern pro Sekunde und mehr ermöglicht, sieht der Arzt - bei einer entsprechend schnellen Bereitstellung stets aktueller Ultraschalldaten - eine dreidimensionale semi-transparente Darstellung des schlagenden Herzens praktisch oder ähnlich wie in einem Film, nämlich in einer sogenannten latenzfreien Animation. Dies ermöglicht insbesondere das Lokalisieren, Navigieren und Positionieren von Herzkathetern oder anderen wenig-invasiven Instrumenten unter kontinuierlicher dreidimensionaler Sicht in das Herz. Der Katheter bzw. das Instrument kann also on-line im Herzen beobachtet werden.

## Patentansprüche

1. Verfahren zum Visualisieren eines räumlich aufgelösten Datensatzes, dessen Daten jeweils einem Volumenelement zugeordnet sind, dessen Lage durch Koordinaten in einem nicht-kartesischen Mess-Koordinatensystem beschrieben wird, dadurch gekennzeichnet, dass die Daten M(rₖ,ϑⱼ,zᵢ,) als Texturen (Trₖ,Tϑⱼ,Tzᵢ) in einen Grafikbeschleuniger (1) geladen werden und dann durch Überlagerung von Texturen (Trₖ,Tϑⱼ,Tzᵢ) eine bildliche Darstellung erzeugt wird.

2. Verfahren nach Anspruch 1, bei welchem die Daten M(rₖ,ϑⱼ,zᵢ,) im ursprünglichen Mess-Koordinatensystem in den Grafikbeschleuniger (1) geladen werden.

3. Verfahren nach Anspruch 1 oder 2, wobei die Texturen (Trₖ,Tϑⱼ,Tzᵢ) derart an das Mess-Koordinatensystem angepasst sind, dass innerhalb einer Textur (Trₖ,Tϑⱼ,Tzᵢ) jeweils eine der Koordinaten (r,ϑ,z) des Mess-Koordinatensystems einen konstanten Wert hat.

4. Verfahren nach einem der vorangehenden Ansprüche, bei welchem im Grafikbeschleuniger (1) für jede Koordinate (r,ϑ,z) des Mess-Koordinatensystems jeweils ein Satz von Texturen (Trₖ;Tϑⱼ;Tzᵢ) angelegt wird, wobei innerhalb der Texturen(Trₖ;Tϑⱼ;Tzᵢ), die zum gleichen Satz gehören, jeweils die gleiche Koordinate (r;ϑ;z) des Mess-Koordinatensystems einen konstanten Wert hat.

5. Verfahren nach Anspruch 4, bei welchem zum Erzeugen der bildlichen Darstellung alle Sätze von Texturen (Trₖ,Tϑⱼ,Tzᵢ) herangezogen werden.

6. Verfahren nach einem der vorangehenden Ansprüche, wobei eine mittels einer Textur (Trₖ,Tϑⱼ,Tzᵢ) generierte Fläche der bildlichen Darstellung bezüglich Ihrer Intensität mit einem Faktor gewichtet wird, in welchen die Orientierung der Fläche relativ zu der Betrachtungsrichtung eingeht.

7. Verfahren nach einem der vorangehenden Ansprüche, bei welchem Texturen (Trₖ,Tzᵢ), die einer gekrümmten oder krummlinig begrenzten Fläche (F) entsprechen, in Subtexturen aufgeteilt werden.

8. Verfahren nach einem der vorangehenden Ansprüche, bei welchem die einzelnen Texturen (Trₖ,Tϑⱼ,Tzᵢ) mit einer Tiefenabschwächung versehen dargestellt werden, die insbesondere nach dem Depth-Cueing Verfahren realisiert wird.

9. Verfahren nach einem der vorangehenden Ansprüche, bei welchem an den jeweils eine Kantenlinie (K,K1,K2,K3) bildenden Rändern von Texturen (Trₖ;Tϑⱼ;Tzᵢ), die zum gleichen Satz von Texturen gehören, eine Abschlusstextur (AT) als Hülle aufgebracht wird, welche Abschlusstextur (AT) diese Ränder verbindet und in der Darstellung eine Modulation zwischen benachbarten Kantenlinien (K,K1,K2,K3) bewirkt.

10. Verfahren nach Anspruch 9, bei welchem die Abschlusstextur (AT) senkrecht auf den Rändern des an sie angrenzenden Satzes von Texturen (Trₖ,Tϑⱼ,Tzᵢ) steht; die Kantenlinien (K,K1,K2,K3) der an sie angrenzenden Texturen (Trₖ,Tϑⱼ,Tzᵢ) enthält, und eine lineare Interpolation der Helligkeit zwischen benachbarten Kantenlinien (K,K1,K2,K3) bewirkt.

11. Verfahren nach Anspruch 9 oder 10, bei welchem die Abschlusstextur (AT) erzeugt wird, indem die Kantentenlinien (K,K1,K2,K3) der angrenzenden Texturen (Trₖ,Tϑⱼ,Tzᵢ) identisch in die Abschlusstextur (AT) übernommen werden und vor jeder dieser Kantenlinien (K,K1,K2,K3) eine Linie der Helligkeit Null eingefügt wird.

12. Verfahren nach einem der vorangehenden Ansprüche, bei welchem das Mess-Koordinatensystem ein Zylinder- oder ein Kugelkoordinatensystem ist.

13. Verfahren nach einem der vorangehenden Ansprüche, bei welchem der Datensatz M(rₖ,ϑⱼ,zᵢ,) auf Messwerten basiert, welche die volumenaufgelöste Abtastung eines Körpers repräsentieren, und bei welchem die bildliche Darstellung eine dreidimensionale, insbesondere semi-transparente, Darstellung des Körpers ist.

14. Verfahren nach einem der vorangehenden Ansprüche, bei welchem der Datensatz M(rₖ,ϑⱼ,zᵢ,) auf Ultraschall-Messwerten basiert, welche repräsentativ für die dreidimensionale Struktur eines Körpers sind.

15. Verwendung eines Verfahrens gemäss einem der vorangehenden Ansprüche, insbesondere für medizinische Zecke, zum schnellen Generieren dreidimensionaler Darstellungen eines Körpers, insbesondere eines menschlichen Körpers oder Teilen davon, anhand von messtechnisch gewonnenen Abtastdaten.
